# EUROPEAN PATENT APPLICATION

(11) **EP 1 491 720 A1**
(43) Date of publication of application: **29.12.2004**
(21) Application number: 04253660.7
(22) Date of filing: 18.06.2004
(51) Int. Cl.: F01D 5/00, F01D 9/04, B23K 10/02, C23C 26/02

(54) **Method for improving the wear resistance of a support region between a turbine outer case and a supported turbine vane**

(30) Priority: 25.06.2003 US 603704
(71) Applicant: GENERAL ELECTRIC COMPANY, Schenectady, NY 12345 (US)
(72) Inventor: Hagle, Michael Philip, Mason, Ohio 45040 (US); Stewart, Matthew, Cinncinnati, Ohio 45213 (US); Troup, Robert Eugene, Hamilton, Ohio 45011 (US)
(74) Representative: Goode, Ian Roy

(57) **Abstract**

A wear-resistant assembly of a turbine outer case (22) and a turbine vane (34) is fabricated by providing a turbine outer case (22), and a turbine vane (34) that, when assembled, is supported on the turbine outer case (22) in a support region such that a vane-support area (52) of the turbine vane (34) contacts a case-support area (54) of the turbine outer case (22). A wear-resistant material is welded to a weld area of at least one of the vane-support area (52) and the case-support area (54). In some circumstances, as where the turbine outer case (22) and the turbine vane (34) have previously been in service, material may be machined from the support region before the welding.

## Description

This invention relates to a turbine engine, more particularly to improving the wear resistance of a wearing support region between a turbine outer case and a supported turbine vane in the engine, and most particularly to such improvements in the turbine section of a gas turbine engine.

In a basic form of an aircraft gas turbine (jet) engine, air is drawn into the front of the engine, compressed by a shaft-mounted compressor, and mixed with fuel. The mixture is combusted, and the resulting hot combustion gases are passed through a turbine section mounted on the same shaft. The flow of gas turns the turbine by contacting an airfoil portion of the turbine blade, which turns the shaft and provides power to the compressor. The hot exhaust gases flow from the back of the engine, driving it and the aircraft forward.

In the turbine section of the engine, stationary turbine vanes (also termed "nozzles") are supported ("hung") on and extend inwardly from a stationary turbine outer case. The turbine blades are supported on and extend outwardly from a rotating rotor disk. Multiple stages of the stationary turbine vanes and the rotating turbine blades alternate with each other along the axial length of the turbine section, to extract the optimum power from the hot combustion gases. The stationary turbine vanes shape and direct the flow of hot exhaust gas to impinge upon the turbine blades and cause them, the rotor disk, and the shaft to turn, powering the compressor.

The stationary turbine vanes are not rigidly supported on the turbine outer case, because of the differential movements generated by the gas forces and fatigue loading, and by the thermal expansion differences of the various portions of the structure during service. Instead, they are somewhat loosely supported by a support region and allowed to move slightly during service.

The relative movements of the turbine outer case and the turbine vane in the support region prolong the life of the structure, but they can produce severe wear damage in the support region. In the usual approach to avoid or repair the damage, the support region is coated with a thermally sprayed wear-resistant coating. However, in the work leading to the present invention, the inventors have found that the thermal-spray coating approach is insufficient in many instances, particularly those where the amount and depth of wear damage are great.

There is a need for an improved approach to providing a wear-resistant assembly of the turbine outer case and the turbine vanes in turbine engines. The need is most acute in gas turbine engines, but it may also be experienced in other types of turbine engines. The present invention fulfills this need, and further provides related advantages.

The present invention provides a method for providing a wear-resistant assembly of a turbine outer case and a turbine vane. The method may be used either with new-make assemblies, or after one or both of the turbine outer case and the turbine vanes have been in service and have experienced wear. In the latter instance, the depth of wear damage that may be repaired with the present approach is much greater than may be repaired with alternative approaches. The use of the present welding technique may simplify subsequent repairs of the assembly.

A method for fabricating a wear-resistant assembly of a turbine outer case and a turbine vane comprises the steps of providing a turbine outer case, and a turbine vane that, when assembled to the turbine outer case, is supported on the turbine outer case in a support region whereat a vane-support area of the turbine vane contacts a case-support area of the turbine outer case. A wear-resistant material is welded to a weld area of at least one of the vane-support area and the case-support area. In the usual case, the assembly is part of a gas turbine engine. There is commonly an additional step, before the step of welding, of removing material from the weld area to which the wear-resistant material is to be applied in the step of welding.

The materials of construction of the turbine outer case and the turbine vane may be of any operable type, and the wear-resistant material may be of any operable and weldable type. In one embodiment, each of the gas turbine outer case and the gas turbine vane is made of a nickel-base alloy, and the wear-resistant material as a cobalt-base alloy.

The present approach is most advantageously applied when the turbine outer case and/or the turbine vane have previously been in service in a turbine engine. In that case, the preferred practice is to remove material from the weld area to which the wear-resistant material is applied in the step of welding, prior to the welding step.

After welding, the turbine vane is normally assembled to the turbine outer case, and the assembly of the turbine vane and turbine outer case is placed into service in a turbine engine. After a period in service and it is determined that maintenance should be performed, the assembled turbine vane and turbine outer case are taken out of service. In many instances, the weld repair is so wear resistant that no repair of the support region is required, or a relatively less difficult, less costly thermal spray process may be used for minor wear repair.

Conventional thermal-spray processes are limited to relatively small thicknesses and repair depths, and to those materials which may be thermally sprayed. The present approach allows other types of materials to be applied, and applied in greater thicknesses than may be applied by thermal spray. As a result, it may be possible to avoid the need for repair of the support region in the usual maintenance cycle, or to use the thermal-spray repair approach in these subsequent repair procedures.

Other features and advantages of the present invention will be apparent from the following more detailed description of the preferred embodiment, taken in conjunction with the accompanying drawings, which illustrate, by way of example, the principles of the invention, and in which:
Figure 1 is a schematic sectional view of a portion of a turbine of a gas turbine engine;
Figure 2 is an enlarged detail of the turbine of Figure 1 in area 2, illustrating the assembly of the gas turbine vane to the gas turbine outer case; and
Figure 3 is a block flow diagram of a preferred approach for practicing an embodiment of the present approach.

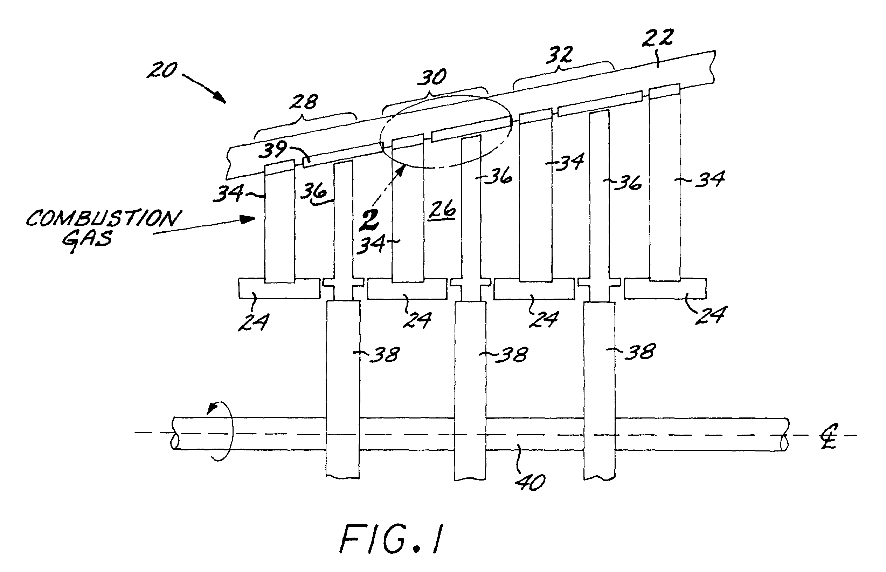

Figure 1 schematically depicts a portion of a turbine 20 of a gas turbine engine. The turbine 20 includes a non-rotating turbine outer case 22 and a non-rotating turbine nozzle structure 24.

There are three individual turbine stages 28, 30, and 32 illustrated, although in most turbines 20 there are more stages. Each of the turbine stages 28, 30, and 32 includes a plurality of turbine vanes (sometimes termed "nozzles") 34 that are supported around the inner circumference of the turbine outer case 22. The turbine vanes 34 are part of the turbine nozzle structure 24 and are substantially stationary to gross movements of the turbine engine, although there are local movements as discussed subsequently. Each of the turbine stages 28, 30, and 32 includes a plurality of turbine blades 36 that are supported around the periphery of a turbine rotor (also sometimes termed a "turbine disk") 38 and whose outer end faces a turbine shroud 39 supported on the turbine outer case 22. The turbine rotors 38 are in turn supported on a shaft 40 that rotates about a centerline of the turbine 20.

Hot combustion gas flows along a gas flow path 26 through the turbine 20 when the turbine is in operation. The flow of the hot combustion gas is shaped and redirected by the stationary turbine vanes 34, so that it strikes the rotatable turbine blades 36 and causes them, the turbine rotors 38, and the shaft 40 to rotate. The power of the shaft 40 is conveyed to the compressor (not shown), which compresses the air that is drawn into the front of the gas turbine engine. The hot combustion gas flows from the back of the gas turbine engine to cause the engine and the aircraft to move forwardly (to the left in Figure 1).

This very brief description of the general structure and operation of the turbine 20 discusses only those elements necessary to understanding the present approach. Elements not pertinent to this discussion, such as seals, flanges, supports, and the like, are not shown. Greater detail on the structure and operation may be found in reference works and in patent references such as U.S. Patent 6,179,560, whose disclosure is incorporated by reference.

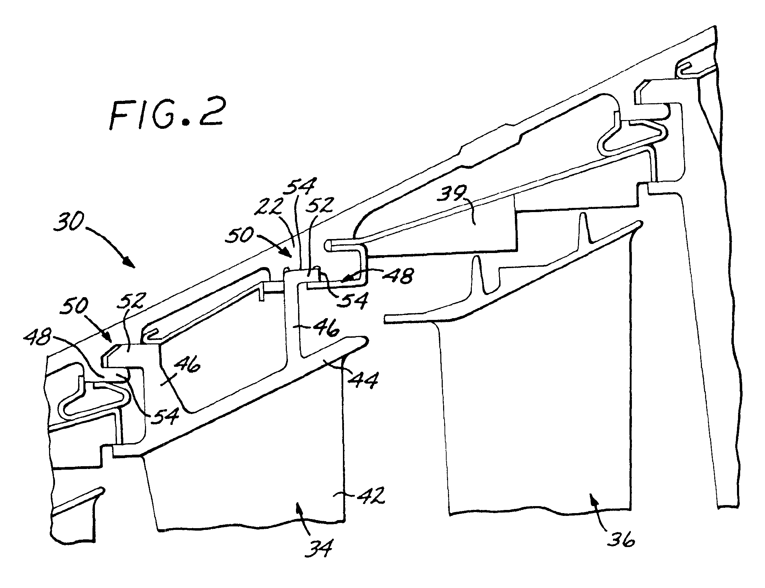

Figure 2 depicts a portion of one of the stages 30 in greater detail, showing the manner in which the turbine vane 34 is supported from the turbine outer case 22 when the nozzle structure 24 and thence the turbine vanes 34 are assembled to the turbine outer case 22. The turbine vane 34 includes an airfoil 42 against which the hot combustion gas is directed, a platform 44 at the radially outer end of the airfoil 42, and vane attachments 46 extending radially outwardly from the airfoil 42 and the platform 44. The vane attachments 46 engage (i.e., are "hung from") corresponding case attachments 48 on the turbine outer case 22 in one or more support regions 50.

The portions of the structures that actually contact each other in the support region 50 are a vane-support area 52 of the turbine vane 34 and a case-support area 54 of the turbine outer case 22. During service, the vane-support area 52 and the case-support area 54 wear against each other by impact and by rubbing. Material is removed from these areas 52 and 54, and the remainder of the vane-support area 52 and the case-support area 54 may be damaged to varying degrees.

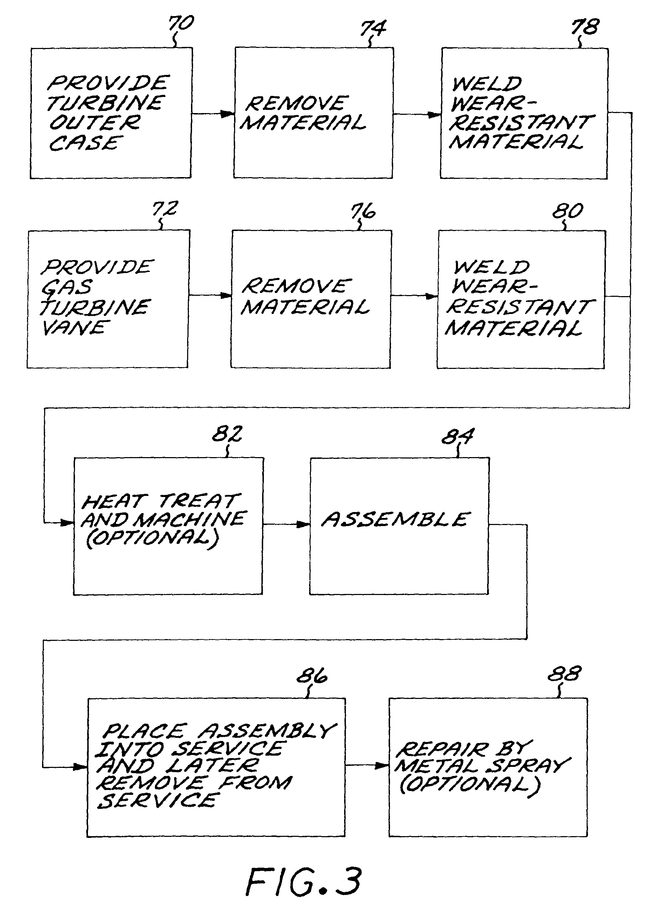

The present approach may be used with the turbines 20 of new-make gas turbine engines, but it is more preferably used to repair the turbines 20 of gas turbine engines that have previously been in service, as depicted in Figure 3.

The gas turbine outer case 22 and the gas turbine vanes 34 are provided, numerals 70 and 72, respectively. Either or both may be wear-damaged (in an engine that has previously been in service) or susceptible to wear-damage (in a new-make engine). The gas turbine outer case 22 is typically made of a forged nickel-base alloy that is selected for mechanical properties such as strength, creep resistance, and fatigue resistance, rather than for wear resistance. (As used herein, an "X-base alloy" has more of element X by weight than any other element. Thus, a nickel-base alloy has more nickel by weight than any other element, and a cobalt-base alloy has more cobalt by weight than any other element.). Examples of forged nickel-base alloys suitable for use in the gas turbine outer case 22 are Waspalloy and Alloy 718, both known materials. The gas turbine vanes 34 are typically made of a different cast or cast-and-worked nickel-base alloy that is selected for mechanical properties and for environmental resistance, rather than for wear resistance. The nickel-base alloys may be nickel-base superalloys, which are nickel-base alloys that are strengthened by the precipitation of more than about 10 percent by volume of gamma prime phase. Consequently, wear damage in the contacting vane-support area 52 and case-support area 54 is not unexpected, and care is taken during inspections to check these areas for wear damage. The wear damage may occur in either the vane-support area 52 or the case-support area 54, or both, and therefore either or both may require repair. An example of a cast nickel-base superalloy suitable for use in the turbine vane 34 is RENE™ 77, a known material.

When wear damage is detected, the damaged material is removed, numerals 74 and 76, typically by machining.

A wear-resistant material is welded to a weld area that is within either or both of the vane-support area 52 and the case-support area, as needed, numerals 78 and 80. Any operable wear-resistant material may be used. The same wear-resistant material need not be used in the vane-support area 52 and the case-support area 54, although the same wear-resistant material may be used if operable. Examples of suitable wear-resistant materials for the repair of nickel-base alloys include metals such as a cobalt-base alloy having a nominal composition in weight percent of about 52 percent cobalt, about 20 percent chromium, about 10 percent nickel, about 15 percent tungsten, balance minor elements; or a cobalt base alloy having a nominal composition in weight percent of from about 16.5 to about 18.5 percent chromium, from about 27 to about 30 percent molybdenum, about 3 to about 3.8 weight percent silicon, about 1.5 maximum percent iron, about 1.5 percent maximum nickel, balance cobalt, with minor elements also present. These compositions have good wear resistance against the nickel-base alloys discussed earlier.

The wear-resistant material must be applied by welding in steps 78 and 80 rather than an alternative process such as a thermal spray process, mechanical attachment, brazing, or the like. Welding provides a metallurgical bond between the weldment and the substrate to which the weldment is applied, which remains sound to elevated temperatures. The weldment may be made much thicker than possible for thermal spray deposits, permitting the repair of much thicker wear-damaged regions than possible with thermal spray techniques. Any suitable welding process may be used in steps 78 and 80, although dabber TIG welding is preferred.

After the welding steps 78 and/or 80 are performed, the turbine outer case 22 and/or the turbine vane 34 are machined and heat treated as necessary, numeral 82. This step is optional but typically used, the machining step because the surface of the weldment is not smooth and of the precise dimensions required, and the heat treating step because the welding process leaves the substrate material of the respective turbine outer case 22 and/or the turbine vane 34 in a state that is not the optimal heat treatment state for subsequent service. Heat treatment is performed according to the approach recommended for the respective base-metal alloys, which are known in each case.

The turbine vanes 34 are assembled to the turbine outer case 22, numeral 84. The assembled turbine 20, including the turbine vanes 34 and turbine outer case 22, is placed into service in a turbine engine, and at a later time taken out of service, numeral 86. The turbine 20 is removed from service either for routine maintenance or as the need arises.

The weld area that was previously welded in steps 78 and/or 80 may not need further repair at this point, as judged by appearance and by dimensional changes while in service. If it requires further repair, the repair is preferably accomplished using a metal thermal spray technique such as air plasma spray or low-pressure plasma spray. These repair techniques are less costly than weld repair, and may be used where the depth of the wear damage is less than that requiring repair by welding. There is no weld repair of the weld area after the welding steps 78 and/or 80, and before the repairing step 88.

## Claims

1. A method for fabricating a wear-resistant assembly of a turbine outer case (22) and a turbine vane (34), comprising the steps of:
providing
a turbine outer case (22), and
a turbine vane (34) that, when assembled, is supported on the turbine outer case (22) in a support region whereat a vane-support area (52) of the turbine vane (34) contacts a case-support area (54) of the turbine outer case (22);
welding a wear-resistant material to a weld area of at least one of the vane-support area (52) and the case-support area (54).

2. The method of claim 1, including an additional step, before the step of welding, of
removing material from the weld area to which the wear-resistant material is to be applied in the step of welding.

3. The method of claim 1, wherein the step of providing includes the step of
providing each of the turbine outer case (22) and the turbine vane (34) made of a nickel-base alloy, and
wherein the step of welding includes the step of
selecting the wear-resistant material as a cobalt-base alloy.

4. The method of claim 1, wherein the step of welding includes the step of welding the wear-resistant material to the case-support area (54).

5. The method of claim 1, wherein the step of welding includes the step of welding the wear-resistant material to the vane-support area (52).

6. The method of claim 1, wherein the step of providing includes the step of
providing at least one of the turbine outer case (22) and the turbine vane (34) that have previously been in service in a turbine engine.

7. The method of claim 6, including an additional step, before the step of welding, of
removing material from the weld area to which the wear-resistant material is applied in the step of welding.

8. The method of claim 6, including additional steps, after the step of welding, of
assembling the turbine vane (34) to the turbine outer case (22),
placing the assembled turbine vane (34) and turbine outer case (22) into service in a turbine engine, thereafter
taking the assembled turbine vane (34) and turbine outer case (22) out of service, and thereafter
repairing the weld area using a metal spray technique, there being no weld repair of the weld area after the step of welding and before the step of repairing.
